(19) Europäisches Patentamt
European Patent Office
Office européen des brevets

(11) Publication number: 0 063 449 B1

(12) # EUROPEAN PATENT SPECIFICATION

(45) Date of publication of patent specification: 30.09.87

(51) Int. Cl.[4]: C 08 J 5/18, C 08 J 3/18 // C08L33/20

(21) Application number: 82301834.6

(22) Date of filing: 07.04.82

(54) A method of producing polymeric aquagels and films.

(30) Priority: 17.04.81 US 255029

(43) Date of publication of application: 27.10.82 Bulletin 82/43

(45) Publication of the grant of the patent: 30.09.87 Bulletin 87/40

(84) Designated Contracting States: BE DE FR GB IT NL SE

(56) References cited:
EP-A-0 018 715
US-A-2 601 254
US-A-3 519 462

(73) Proprietor: MOBIL OIL CORPORATION
150 East 42nd Street
New York New York 10017 (US)

(72) Inventor: Hungerford, Gordon Parry
2210 Creek Road
Palmyra New York (US)

(74) Representative: Cooper, John Anthony et al
Mobil Court 3 Clements Inn
London WC2A 2EB (GB)

EP 0 063 449 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the treatment of water-containing polymers and the production of oriented polymer film therefrom. In particular, it relates to polyacrylonitrile (hereinafter referred to as PAN) compositions and methods for applying plasticizer to water-containing PAN substrates during film manufacture.

High nitrile polymers are employed in making packaging films, foils and sheets having good resistance to passage of oxygen and water vapor. PAN homopolymer film is an excellent gas barrier material but it lacks adequate flex-crack resistance in unmodified form, even after molecular orientation. Addition of an inert or non-hazardous plasticizer to improve flex performance, stress-strain properties and impact strength is desirable for food packaging or wrap film.

Prior art film manufacturing techniques (see, for example, U.S. Patents 3,951,893 and 4,035,540) may incorporate plasticizers or other compatible impregnants prior to the formation and orientation of the films. It is an object of the invention to provide a simplified system for treating water-containing polymer sheets with organic impregnants.

According to the invention, novel glycolether-plasticized polyacrylonitrile materials are produced by an improved manufacturing process wherein a polymeric aquagel is contacted with a water-miscible glycol ether which diffuses into the polymer in controlled amount.

More specifically, a continuous processing technique has been found for impregnating a polymeric aquagel by contacting the polymer with an aqueous bath of water-miscible glycol ether. The process is particularly adaptable for plasticizing PAN with water-miscible glycol ethers by maintaining a predetermined concentration of organic impregnant in the aqueous bath under steady state process conditions. While passing the continuous polymeric aquagel film through the bath at substantially constant water content, the glycol ether is absorbed into the aquagel at predetermined concentration. The glycol ether may be added to the aqueous bath in a steady stream consisting essentially of glycol ether. For instance, the glycol ether can be metered to the bath as substantially undiluted liquid and no additional water is input to the process so that the concentration of water components in the aquagel and bath attain equilibrium conditions during continuous processing.

In accordance with the invention, therefore, there is provided a continuous, steady state process for treating a polyacrylonitrile aquagel strip with a water-miscible glycol ether in aqueous solution comprising the steps of:

passing the aquagel strip through a treatment bath containing the aqueous solution, the aquagel containing at least 40 weight percent water uniformly dispersed in the polyacrylonitrile and the glycol ether in the solution diffusing into the strip during passage of the strip through the bath;

passing the aquagel strip from the bath while removing excess of the aqueous solution therefrom; and

metering the glycol ether to the aqueous solution at a concentration greater than the aqueous glycol ether concentration of the bath and at a rate substantially proportional to desired steady state treatment of glycol ether for the aquagel strip.

Acccording to another aspect of the invention, there is provided a process of producing an oriented acrylonitrile polymer film comprising forming a polymer film from a solution of the polymer in a water-soluble solvent, washing the polymer film to replace the solvent with water and form an aquagel film, stretching the aquagel to orient the polymer and drying the oriented polymer film to remove water, characterized in that the aquagel film is treated with water-miscible glycol ether to increase the impact strength of the polymer. Preferably, the acrylonitrile polymer contains at least 80 percent acrylonitrile repeating units and the glycol ether consists essentially of triethylene glycol.

The technique is advantageous in producing polyacrylonitrile containing a plasticizing amount of triethylene glycol, or another non-volatile, low molecular weight polyalkylene glycol ether to provide increased film toughness. In addition, the invention provides a self-supporting uniform film consisting essentially of a biaxially-oriented high nitrile addition polymer containing at least 80% acrylonitrile repeating units; and dispersed in the polymer a low molecular weight non-volatile polyalkylene glycol ether in sufficient amount to plasticize the polymer and substantially increase film toughness.

Film feedstock to be used in the method of the invention can be derived from continuous film casting or extruding equipment. Flat film may be solvent cast according to the process of U.S. Patent No. 4,066,731, wherein acrylonitrile homopolymer or interpolymer in a water soluble, organic solvent is cast onto a rotating drum from a sheeting die and coagulated as a self-supporting film. The organic solvent, such as dimethyl sulfoxide is at least partially replaced with water to obtain an aquagel film containing at least 40%, typically 40 to 60%, water integrally bound in the molecular interstices or dispersed in the orientable polymer matrix. A tubular PAN film can be extruded and water-coagulated if desired, according to the teachings of U.S. Patent No. 4,144,299 and the unoriented film can be slit and fed to treatment and orientation units as a flat strip. Aqueous PAN film can also be made by melt-extrusion of a high temperature polymer hydrate in a known manner.

The preferred film feedstock is an addition polymer material containing sufficient water to be stretched at low temperatures. Acrylonitrile polymers containing at least 5% $H_2O$, preferably aquagels containing about 40 to 60% $H_2O$, are excellent film substrates for use herein. The present system is especially valuable for treating PAN homopolymer, such as duPont Type A resin. Polymers that are particularly useful for

treatment with organic impregnants are high-nitrile materials, preferably containing at least 80% acrylonitrile repeating units. Homopolymer PAN, copolymers and interpolymers with hydrophilic ethylenically-unsaturated monomers, such as acrylic acids and esters, may also be employed. Typical high-nitrile polymers are disclosed in U.S. Patents 2,585,444, 3,873,508, 3,896,204, 3,984,601 and 4,053,442. While emphasis is placed on those polyacrylonitrile materials which are comprised of very high nitrile content due to the presence of acrylonitrile repeating units in the polymeric chain, it is understood that the inventive concept can be employed with other polymeric aquagels.

The impregnant comprises at least one plasticizing compound having the formula:

$$HO(-CH_2\underset{\substack{|\\R}}{C}H-O-)_n-H,$$

where R is H or $CH_3$, and n is an integer from 2 to 4. These are low molecular weight glycol ether compounds that can migrate in the polymeric matrix and have a molecular weight range from about 106 to 250. Preferred impregnants are non-volatile, having a normal boiling point of at least 150°C, preferably about 245 to 300°C. Di-, tri- and tetra-ethylene glycol, dipropylene glycol, etc. may be employed alone or in mixture with one another or with other impregnants. The most preferred impregnant is triethylene glycol.

In the accompanying drawings,

Figure 1 is a schematic representation of a system for producing and uniaxially stretching an aquagel film; and

Figure 2 is a schematic sideview of a system for impregnating, coating, further orienting and drying the aquagel film produced by the system of Figure 1.

Referring to Figure 1, a continuous flow system for manufacturing aquagel film is shown in which a hot polyacrylonitrile dimethylsulfoxide solution is fed under pressure to a sheeting die 1, which extrudes a thin film 10 of polymer solution onto a cold drum surface 20. After contacting an aqueous medium, the self-supporting film 10 is stripped from the drum 20 and traverses a countercurrent aqueous bath 30, wherein the organic solvent is removed and replaced by water, thereby forming an aquagel. The film 10 passes through a machine direction orientor (MDO) 40 comprising a first heated roll maintained at about 75°C and thereafter a series of orienting rolls 42, 43, 44. These rolls are maintained at a sufficient differential speed to longitudinally stretch the film at a ratio of about 2:1 to 3:1 thereby providing a uniaxially oriented aquagel film. The faster rolls are kept at about 50°C. Thereafter the film is transferred to plasticizer treatment and transverse direction orientation (TDO) sections as shown in Figure 2.

Referring to Figure 2, the uniaxially oriented aquagel film 10 is passed at constant linear rate (e.g., about 15 cm/s) through an impregnating treatment tank 50 containing an aqueous bath of an organic impregnant, such as triethylene glycol (TEG). There it is maintained in contact with the impregnant solution for a sufficient residence time for the impregnant to impregnate the film. Excess solution may be removed from the film immediately on removal from the tank if the tank residence time is sufficient to permit substantial equilibrium. Additional contact time can be obtained by permitting dragout of the treating solution with downstream rolls 52, 54 removing excess solution and returning it to the tank 50 via a gravity drip trough 56. This equipment arrangement minimizes tank size. Advantageously, undiluted TEG impregnant is metered at constant rate into the tank 50 by a metering pump 58. Concentration of impregnant in tank 50 can be self-controlling so that, for example, if an aquagel film containing 45 weight percent water is fed at continuous rate through the tank and 8—12 parts of TEG per 100 parts of dry polymer is metered to the tank, water migration through the film can maintain a steady state concentration of about 15—30 weight percent TEG in the tank for a 2 second residence time. Accordingly, by addition of pure liquid TEG at the desired rate, uptake of plasticizer by the film and water migration will inherently stabilize at the equilibrium concentration without addition of water to the tank.

While the dip tank application is a preferred expedient in the process of the invention, it is understood that hygroscopic plasticizer may be applied by other techniques, such as uniformly coating the wet aquagel with pure or diluted TEG by spraying, roll coating, or meniscus coating. Other compatible additives, such as dyes and stabilizers, may be incorporated into the PAN product simultaneously with the plasticizers, if desired, or a separate series of steps can treat the aquagel with other materials, such as a coating of a further organic material. For instance, it is often desirable to provide a heat seal or barrier coating on a PAN substrate.

As the film progresses from the optional coating section, as shown in Figure 2, it passes through a transverse direction orientation (TDO) unit 60. The transverse direction orientation (TDO) step is usually effected by attaching edge clips to the film progressively and stretching the film perpendicular to its machine direction travel. The edge portions are much thicker than the main body of the film and are ordinarily trimmed from the finished product. In the TDO unit the film may be contacted with moist hot gas to prevent excessive water loss. Means for impinging hot water-saturated air or the like at high velocity can be provided in a standard tentering apparatus. TD stretch ratios of 2:1 to 4:1 or higher may be employed, with 3:1 being employed for typical PAN aquagel film.

The biaxially oriented film is dried under constraint in a drier unit 70 to remove water and other volatile materials which may be present in the film, either residual organic solvent or monomer from the film

casting operation or volatile components of secondary organic treating compositions. As the film passes through the drier unit 70, it receives energy from a bank of radiant heaters 71 and thereafter is completely dried in an oven section 72, where hot air at about 200°C is directed towards the film at high velocity. Thereafter the film is reduced to handling temperature by a stream of cool air at the exit end of the drier unit 70 and trimmed by slitting blades to remove the edge portions. The biaxially-oriented film may then be wound onto a spool for storage or further processed by additional steps or fed directly to a fabrication line.

In the following description and examples, metric units and parts by weight are employed unless otherwise stated.

Examples 1 to 5

Polyacrylonitrile homopolymer aquagel film was made according to U.S. Patent No. 4,066,731. The sheet weighed about 21 to 38 mg/cm$^2$ (140 mg/in$^2$ to 250 mg/in$^2$) and contained about 45—50% water. The sheet was longitudinally stretched 2× on a machine direction orienter with a first heated roll (75°C) and cooler speed differential rolls (50°C). The uniaxially oriented wet film entered the treatment apparatus of Figure 2 at a linear speed of about 9 meters/minute.

A plasticizing agent was diffused into the aquagel film by passing the film through a dip tank containing about 5 to 30 weight percent triethylene glycol at ambient temperature (20—25°C). After TD stretch orientation (3×) and drying, the TEG-treated films were compared with untreated pure PAN film for optical, physical and gas barrier properties. Properties are shown in Table I for a variety of standard tests.

TABLE I
Properties of PAN film containing triethylene glycol

| | Run #1 control | Run #2 | Run #3 | Run #4 | Run #5 |
|---|---|---|---|---|---|
| Nominal dip bath conc. (wt.% TEG) | 0 | 5 | 8 | 15 | 28 |
| Wt.% TEG measured in film (dry basis) | 0 | 4.1 | 5.0 | 8.1 | 11.8 |
| Oxygen transmission ($TO_2$) as made, cc/day, 100 $in^2$, atm ($cm^3/m^2 \cdot d \cdot bar$) | 0.01 (0.153) | 0.023 (0.352) | 0.034 (0.520) | 0.045 (0.689) | 0.116 (1.775) |
| $TO_2$ after 10 Gelbo cycles | — | — | — | 0.19 | 0.19 |
| Water vapor transmission (WVTR) as made, g/day, 100 $in^2$ ($g/m^2 \cdot d$) | — | 1.6 (24.8) | 2.0 (31.0) | 3.3 (51.2) | 9.9 (153.5) |
| Flex-crack test (No. pinholes after 10 Gelbo cycles) | 5* | 4.5* | 2* | 2 | 0 |
| Extreme flex-crack (No. pinholes after 100 Gelbo cycles) | — | — | — | 8.5 | 3 |
| Modulus of elasticity Kpsi MD/TD (kPa) | 751/779 (5178/5371) | 655/705 (4516/4861) | 638/715 (4398/4930) | 575/632 (3964/4357) | 524/576 (3613/3971) |
| Yield stress Kpsi MD/TD (kPa) | 20.1/20.6 (138.6/142.0) | 17.4/17.9 (120.0/123.4) | 17.0/18.0 (117.2/124.1) | 15.5/15.2 (106.9/104.8) | 13.9/13.2 (95.8/91.0) |

TABLE I (contd.)
Properties of PAN film containing triethylene glycol

| | Run #1 control | Run #2 | Run #3 | Run #4 | Run #5 |
|---|---|---|---|---|---|
| Elongation at break % MD/TD | 48/34 | 61/41 | 69/41 | 77/47 | 72/46 |
| Ultimate tensile stress | | | | | |
| Kpsi MD/TD | 22.8/28.7 | 22.5/28.8 | 23.5/27.6 | 20.3/24.7 | 18.2/23.0 |
| (kPa) | (157.2/197.9) | (155.1/198.6) | (162.0/190.3) | (140.0/171.7) | (125.5/158.6) |
| Impact strength at 72°F (22°C) | 2.4 | 3.8 | 6.1 | 8.6 | 9.1 |
| at 0°F (−18°C) | 1.6 | 2.3 | 4.9 | 4.1 | 8.8 |
| % Haze after 12 Tabor cycles | 5.7 | — | 5.0 | 4.5 | 5.6 |
| % Shrinkage at 225°F (107°C) MD/TD | 0.7/0.2 | 0.8/0.2 | 0.8/0.2 | 0.9/0.3 | 0.9/0.6 |
| % Shrinkage at 400°F (204°C) MD/TD | 4.0/1.5 | 4.3/2.6 | 4.8/3.2 | 6.6/6.2 | 8.0/8.5 |

*Large, torn holes.

Flex-crack resistance is increased markedly by incorporating at least 5% TEG in the PAN homopolymer film, while gas transmission ($O_2$ and water vapor) does not become excessive with 8 to 12% TEG. Optical clarity remains excellent for the treated film, an important property for food packaging applications. The treated films are less stiff, having higher impact strength and greater elongation at break than untreated PAN. Resistance to damage by handling and abrasion is good. Thermal stability of the film is assured by drying the product at about 200° to 250°C, well below the boiling point of TEG (about 290°C). Under normal manufacturing and use conditions the preferred glycol ether plasticizers are non-fugitive, which tends to prolong plasticizing during storage.

**Claims**

1. A continuous, steady state process for treating a polyacrylonitrile aquagel strip with a water-miscible glycol ether in aqueous solution comprising the steps of:

passing the aquagel strip through a treatment bath containing the aqueous solution, the aquagel containing at least 40 weight percent water uniformly dispersed in the polyacrylonitrile and the glycol ether in the solution diffusing into the strip during passage of the strip through the bath;

passing the aquagel strip from the bath while removing excess of the aqueous solution therefrom; and

metering the glycol ether to the aqueous solution at a concentration greater than the aqueous glycol ether concentration of the bath and at a rate substantially proportional to desired steady state treatment of glycol ether for the aquagel strip.

2. A continuous process for impregnating a polymeric aquagel by contacting the polymer with an aqueous bath of water-miscible glycol ether comprising the steps of:

passing a continuous strip of the polymeric aquagel through the bath, the aquagel having a substantially constant water content;

absorbing the glycol ether into the aquagel; and

adding glycol ether to the aqueous bath at a rate so as to maintain a substantially constant concentration of glycol ether in the bath and allow the concentration of water components in the aquagel and bath to attain equilibrium conditions.

3. A process as claimed in claim 1 or claim 2, wherein the glycol ether is metered to the bath as substantially undiluted liquid and no additional water is input to the process.

4. A process as claimed in any one of claims 1 to 3, wherein the glycol ether has the formula:

$$HO(-CH_2\underset{\displaystyle R}{\underset{|}{C}}H-O-)_n-H,$$

where R is H or $CH_3$, and n is an integer from 2 to 4.

5. A process as claimed in claim 4, wherein the glycol ether comprises triethylene glycol.

6. A process of producing an oriented acrylonitrile polymer film comprising forming a polymer film from a solution of the polymer in a water-soluble solvent, washing the polymer film to replace the solvent with water and form an aquagel film, stretching the aquagel to orient the polymer and drying the oriented polymer film to remove water, characterized in that the aquagel film is treated with water-miscible glycol ether to increase the impact strength of the polymer.

7. A process as claimed in claim 6, wherein the acrylonitrile polymer contains at least 80 percent acrylonitrile repeating units and the glycol ether consists essentially of triethylene glycol.

**Patentansprüche**

1. Kontinuierliches stationäres Verfahren zur Behandlung eines Polyacrylnitril-Aquagelbandes mit einem mit Wasser mischbaren Glykolether in wässriger Lösung, welches die Schritte umfaßt:

Leiten des Aquagelbandes durch ein Behandlungsbad, das die wässrige Lösung enthält, wobei das Aquagel mindestens 40 Gew.-% enthält, das in den Polyacrylnitril einheitlich dispergiert ist, und der Glykolether in der Lösung während des Durchganges des Bandes durch das Bad in das Band diffundiert,

Leiten des Aquagelbandes aus dem Bad, wobei der Überschuß der wässrigen Lösung davon entfernt wird und

Dosieren des Glykolethers zur wässrigen Lösung mit einer Konzentration, die größer als die Konzentration des wässrigen Glykolethers des Bades ist und mit einer Menge, die der gewünschten stationären Behandlung des Glykolethers für das Aquagelband im wesentlichen proportional ist.

2. Kontinuierliches Verfahren zur Imprägnierung eines polymeren Aquagels durch Kontakt des Polymers mit einem wässrigen Bad eines mit Wasser mischbaren Glykolethers, welches die Schritte umfaßt:

Leiten eines kontinuierlichen Bandes des polymeren Aquagels durch das Bad, wobei das Aquagel einen im wesentlichen konstanten Wassergehalt aufweist,

Absorbieren des Glykolethers in das Aquagel und einer Zugabe von Glykolether zum wässrigen Bad mit einer Menge, um die Konzentration des Glykolethers im Bad im wesentlichen konstant zu halten und zu

ermöglichen, daß die Konzentration der Wasserkomponenten im Aquagel und im Bad Gleichgewichtsbedingungen erreicht.

3. Verfahren nach Anspruch 1 oder 2, worin der Glykolether als im wesentlichen unverdünnte Flüssigkeit zum Bad dosiert wird und kein zusätzliches Wasser dem Verfahren zugegeben wird.

4. Verfahren nach einem der Ansprüche 1 bis 3, worin der Glykolether die Formel aufweist:

$$HO(-CH_2\underset{\displaystyle R}{\underset{|}{C}}H-O-)_n-H$$

worin R, H oder $CH_3$ darstellt und n eine ganze Zahl von 2 bis 4 ist.

5. Verfahren nach Anspruch 4, worin der Glykolether Triethylenglykol umfaßt.

6. Verfahren zur Herstellung eines orientierten Acrylnitrilpolymerfilms, das die Bildung des Polymerfilms aus einer Lösung des Polymers in einem wasserlöslichen Lösungsmittel, das Waschen des Polymerfilms um das Lösungsmittel durch Wasser zu ersetzen und einen Aquagelfilm zu bilden, das Strecken des Aquagels um das Polymer zu orientieren und das Trocknen des orientierten Polymerfilms umfaßt, um Wasser zu entfernen, dadurch gekennzeichnet, daß der Aquagelfilm mit einem mit Wasser mischbaren Glykolether behandelt wird, um die Schlagfestigkeit des Polymers zu erhöhen.

7. Verfahren nach Anspruch 6, worin das Acrylnitrilpolymer mindestens 80% such wiederholender Acrylnitrileinheiten enthält und der Glykolether im wesentlichen aus Triethylenglykol besteht.

**Revendications**

1. Un procédé continu en régime permanent pour traiter une bande de gel aqueux de polyacrylonitrile par un éther de glycol miscible avec l'eau en solution aqueuse, comprenant les étapes suivantes:

on fait passer la bande de gel aqueux à travers un bain de traitement contenant la solution aqueuse, le gel aqueux contenant au moins 40% en poids d'eau uniformément dispersée dans le polyacrylonitrile et l'éther de glycol dans la solution diffusant dans la bande pendant le passage de la bande à travers le bain;

on fait passer la bande de gel aqueux hors du bain en en éliminant l'excès de la solution aqueuse; et

on dose l'éther de glycol dans la solution aqueuse à une concentration supérieure à la concentration de l'éther de glycol aqueux dans le bain et à un débit pratiquement proportionnel au traitement à l'éther de glycol en régime permanent souhaité pour la bande de gel aqueux.

2. Un procédé continu pour imprégner un gel aqueux de polymère par mise en contact du polymère avec un bain aqueux d'un éther de glycol miscible avec l'eau, comprenant les étapes suivantes:

on fait passer une bande continue du gel aqueux de polymère à travers le bain, le gel aqueux ayant une teneur en eau pratiquement constante;

on fait absorber l'éther de glycol dans le gel aqueux; et

on ajoute l'éther de glycol au bain aqueux à un débit tel qu'il maintienne une concentration pratiquement constante d'éther de glycol dans le bain et permette d'atteindre les conditions d'équilibre de concentration des composants aqueux dans le gel aqueux et dans le bain.

3. Un procédé selon la revendication 1 ou 2, dans lequel l'éther de glycol est dosé dans le bain à l'état liquide pratiquement non dilué et l'on n'introduit pas d'eau supplémentaire dans le procédé.

4. Un procédé selon l'une quelconque des revendications 1 à 3, dans lequel l'éther de glycol répond à la formule

$$HO(-CH_2\underset{\displaystyle R}{\underset{|}{C}}H-O-)_n-H$$

dans lequel R est H ou $CH_3$ et n est un entier de 2 à 4.

5. Un procédé selon la revendication 4, dans lequel l'éther de glycol consiste en triéthylèneglycol.

6. Un procédé pour la production d'un film de polymère d'acrylonitrile orienté consistant à former un film de polymère à partir d'une solution du polymère dans un solvant soluble dans l'eau, à laver le film de polymère pour remplacer le solvant par de l'eau et former un film de gel aqueux, à étirer le gel aqueux pour orienter le polymère et à sécher le film de polymère orienté pour éliminer l'eau, caractérisé en ce que le film de gel aqueux est traité par un éther de glycol miscible avec l'eau pour augmenter la résistance au choc du polymère.

7. Un procédé selon la revendication 6, dans lequel le polymère d'acrylonitrile contient au moins 80% de motifs récurrents d'acrylonitrile et l'éther de glycol consiste essentiellement en triéthylèneglycol.

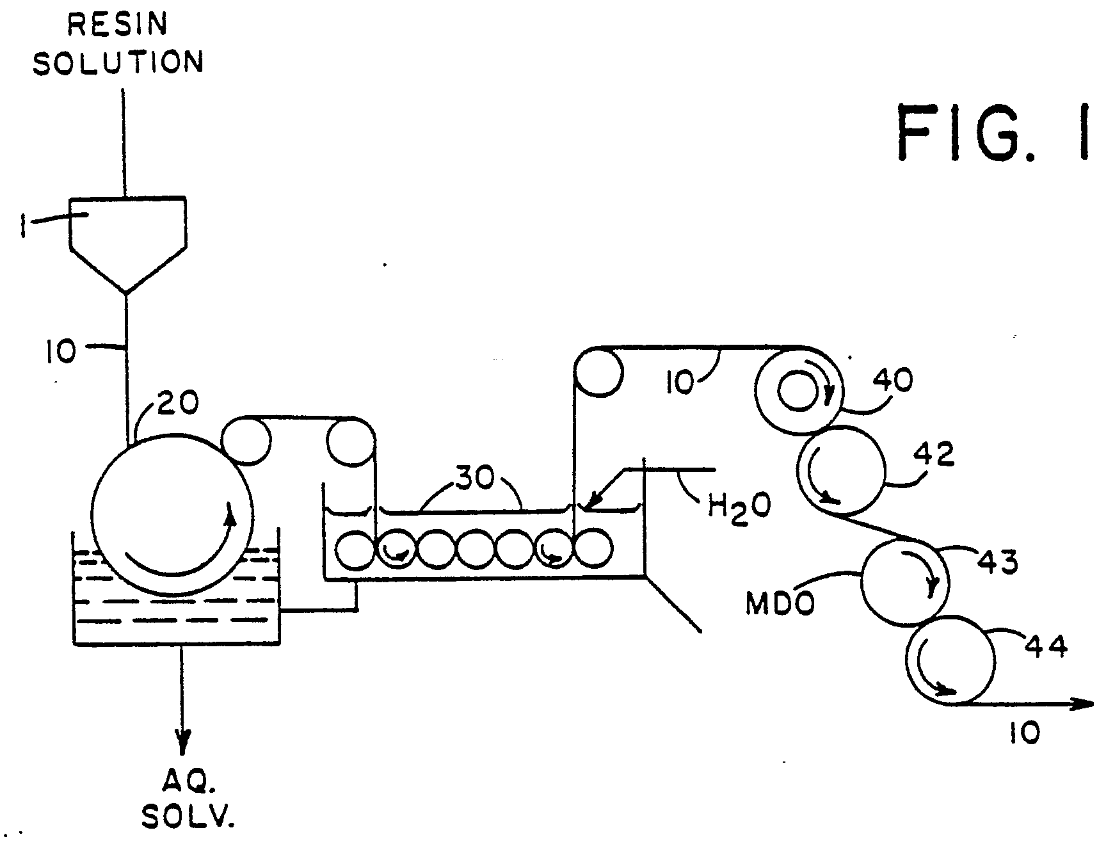
RESIN
SOLUTION
1
10
20
30
H2O
10
40
42
43
MDO
44
10
AQ.
SOLV.

FIG. 1

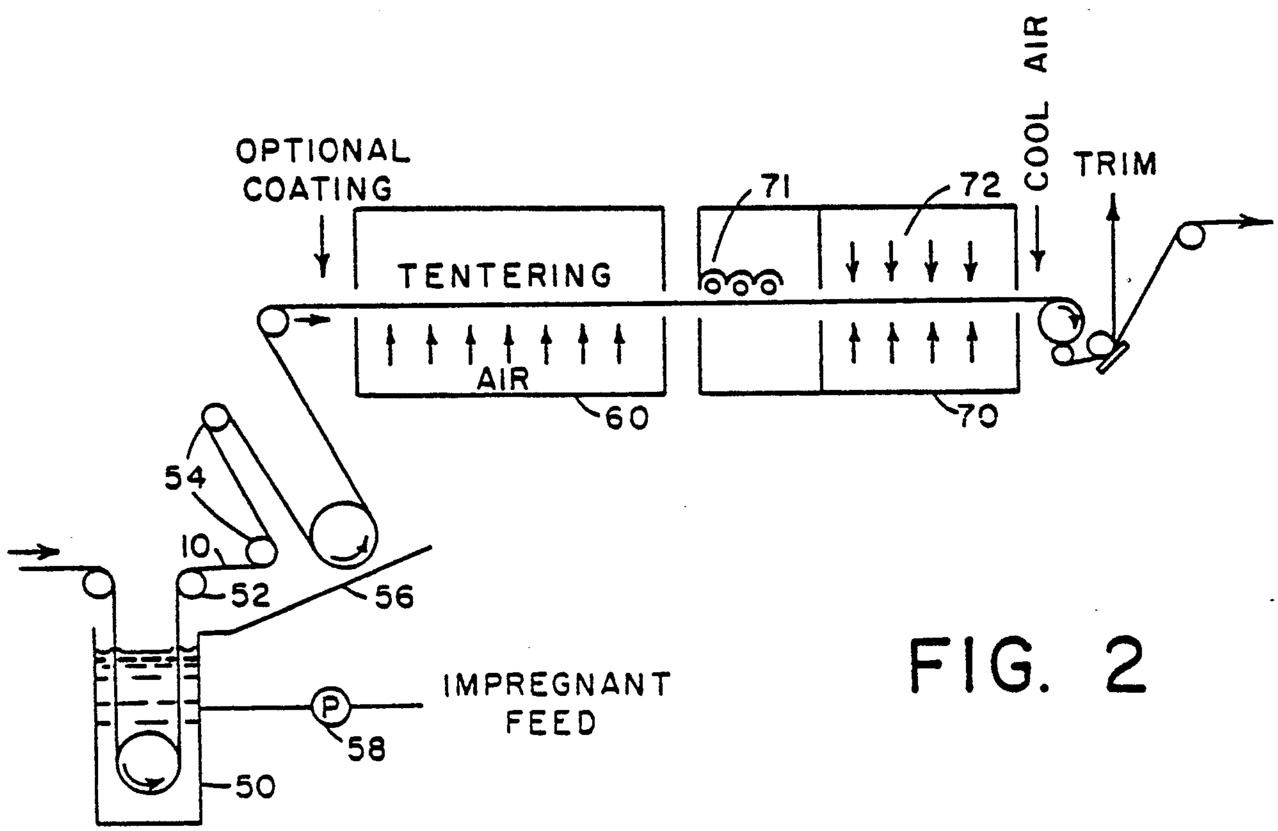
OPTIONAL
COATING
TENTERING
AIR
60
71
72
COOL AIR
TRIM
70
54
10
52
56
IMPREGNANT
FEED
P
58
50

FIG. 2